# NEUE EUROPÄISCHE PATENTSCHRIFT

(11) **EP 0 785 042 B2**
(45) Veröffentlichungstag und Bekanntmachung des Hinweises auf die Entscheidung über den Einspruch: **17.07.2002**
(45) Hinweis auf die Patenterteilung: 03.03.1999
(21) Anmeldenummer: 96120554.9
(22) Anmeldetag: 20.12.1996
(51) Int. Cl.: B23K 1/00, A47J 36/02

(54) **Emailliertes Kochgeschirr und Verfahren zu seiner Herstellung**
Enamelled cooking vessel and process of manufacturing
Utensile de cuisine émaillé et son procédé de fabrication

(30) Priorität: 17.01.1996 DE 19601491
(43) Veröffentlichungstag der Anmeldung: 23.07.1997
(73) Patentinhaber: Merten & Storck GmbH & Co., 48317 Drensteinfurt (DE)
(72) Erfinder: Müller, Frank, Dipl.-Ing., 59227 Ahlen (DE)
(74) Vertreter: Hosbach, Hans Ulrich, Dipl.-Ing.

(56) Entgegenhaltungen:
- CH-A- 523 111
- DE-A- 2 827 444
- DE-A- 2 908 035
- DE-A- 3 522 492
- GB-A- 1 361 458

## Beschreibung

Die Erfindung betritt ein Verfahren zum Herstellen eines emaillierten Kochgeschirrs, wobei ein Rohkörper mit Boden und Seitenwandung aus Stahlblech tiefgezogen sowie innen und außen emailliert wird.

Derartige emaillierte Kochgeschirre können in unterschiedlichen Abmessungen als Töpfe, Pfannen, Kessel und dergleichen hergestellt werden. Sie zeichnen sich durch gute Kocheigenschaften aus, die auf die Wärmeleitfähigkeit des Stahlbiechs zurückzuführen sind.

Die Korrosionsanfälligkeit des Stahlblechs wird durch Emaillieren beseitigt.

Der Erfindung liegt die Aufgabe zugrunde, die Kocheigenschaften des emaillierten Kochgeschirrs weiter zu verbessern.

Zur Lösung dieser Aufgabe werden erfindungsgemäß ein Verfahren nach Anspruch 1 und ein Kochgeschirr gemäß Anspruch 3 vorgeschlagen.

Hierdurch kommt es zu einer Legierungsbildung der Kupferplatine mit dem Boden des Rohkörpers und mit der Unterplatte.

Die Folge dieser Legierungsbildung ist eine Verbesserung der Kocheigenschaften des emaillierten Kochgeschirrs. Zu nennen sind hier Ankochzeit, Energieverbrauch, Wärmequerleitung, Wärmespeicherung und Anbrennverhalten. Auch ergibt sich eine gute Langzeitstabilität. Hervorzuheben ist ferner, daß sich das erfindungsgemäß hergestellte emaillierte Kochgeschirr für sämtliche Beheizungssysteme eignet, also für Gußkochplatten, Glaskeramik-Kochstellen, Strahlungs- und Halogenbeheizung und insbesondere auch - bedingt durch die ferromagnetischen Eigenschaften des Stahls - für Induktionsbeheizung.

Die Dicke der Kupferplatine wird so gewählt, daß sich bei der Hochtemperatur-Lötung die gewünschte Legierung ergibt. Diese stellt einen durchgehenden Verbund zwischen dem Boden des Rohkörpers und der Unterplatte dar, wobei sich der Verbund über die gesamte Verbindungsfläche erstreckt.

Als wesentlicher weiterer Vorteil ergibt sich, daß mit dem erfindungsgemäßen Verfahren Kochgeschirre mit beliebiger Bodendicke hergestellt werden können. Letztere läßt sich über die Dicke der Unterplatte bestimmen. Da tatsächlich lediglich die Bodendicke verändert wird, ohne daß dadurch die Dicke der Seitenwandung beieinflußt würde, ist die gesamte Gewichtszunahme des Kochgeschirrs selbst bei vergleichsweise dicker Unterplatte relativ gering.

Die Hochtemperatur-Lötung wird erfindungsgemäß bei ca. 1.100 °C durchgeführt, und zwar vorteilhafterweise unter gesteuerter Atmosphäre in einem Durchlaufofen.

Erwähnt sei ferner, daß das erfindungsgemäße Verfahren den normalen Arbeitsablauf bei der Herstellung von emaillierten Kochgeschirren aus Stahl nicht weiter stört, da die Hochtemperatur-Lötung als zusätzlicher Arbeitsschritt ohne weiteres in den konventionellen Arbeitsablauf eingefügt werden kann. Es schließen sich sodann die üblichen Schritte des Emaillierungsprozesses an, wie Grundauftrag, Deckauftrag und Dekorauftrag. Änderungen dieses Verfahrensablaufs sind nicht erforderlich. Gleiches gilt ersichtlich für das Tiefziehen des Rohkörpers.

Die Erfindung wird im folgenden anhand eines bevorzugten Ausführungsbeispiels im Zusammenhang mit der beiliegenden Zeichnung näher erläutert. Die Zeichnung zeigt in:
- Fig. 1: einen schematischen Schnitt durch den Boden eines Kochgeschirrs vor dem Hochtemperatur-Löten;
- Fig. 2: einen schematischen Schnitt durch den Boden des fertiggestellten Kochgeschirrs.

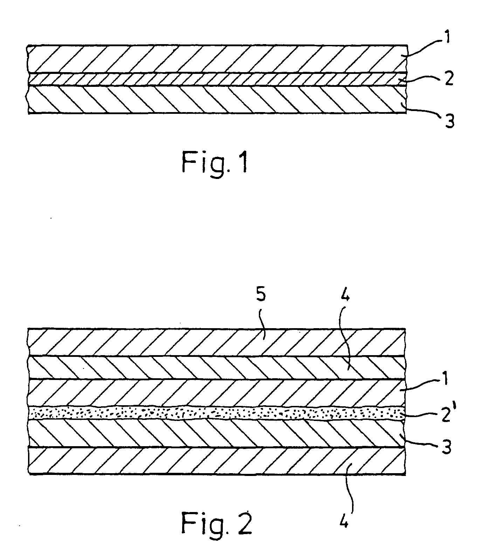

Bei der Herstellung des erfindungsgemäßen emaillierten Kochgeschirrs wird ein Rohkörper aus Stahlblech tiefgezogen, und zwar mit einem Boden 1 und einer nicht dargestellten Seitenwandung. Der Boden 1 wird mit einer Kupferplatine 2 unterlegt, und diese wird ihrerseits mit einer Unterplatte 3 abgedeckt. Letztere besteht ebenfalls aus Stahlblech. Fig. 1 zeigt die Anordnung nach Durchführung der geschilderten Verfahrensschritte.

Anschließend erfolgt eine Hochtemperatur-Lötung, die bei ca. 1.100 °C durchgeführt wird, und zwar in einem Durchlaufofen unter gesteuerter Atmosphäre, wobei eine Mehrzahl von Chargen gleichzeitig behandelt werden kann. Dabei kommt es zu einer Legierung der Kupferplatine 2 mit den benachbarten Stahlblechen. Die durchgehende Legierungsschicht ist in Fig. 2 mit dem Bezugszeichen 2' bezeichnet. Es ergibt sich also eine sehr innige Verbindung des Kupfers mit den benachbarten Stahlblechen, wodurch sich die Kocheigenschaften des Kochgeschirrs verbessern.

Anschließend werden sodann die konventionellen Emaillierungsschritte durchgeführt, d.h., es erfolgt der Auftrag eines Grundemail 4 sowie im Topfinneren der Auftrag eines Deckemail 5 (siehe Fig. 2).

Im Rahmen der Erfindung sind durchaus Abwandlungsmöglichkeiten gegeben. So kann die Dicke der Kupferplatine und vor allem auch die der Unterplatte variiert werden. Ferner können andere Hartlötverfahren zur Anwendung kommen, sofern der angestrebt Legierungseffekt erzielt wird. Die Emaillierung kann den üblichen Verfahrensvarianten folgen. So sind zusätzliche Schichten möglich, beispielsweise ein Deckemail auch auf der Unterseite des Bodens. Ferner können zusätzliche Dekorschichten aufgetragen werden. Die Form des Kochgeschirrs spielt selbstverständlich keine Rolle, abgesehen davon, daß ein entsprechend geformter Boden erforderlich ist.

## Patentansprüche

1. Verfahren zum Herstellen eines emaillierten Kochgeschirrs, wobei
- ein Rohkörper mit Boden (1) und Seitenwandung aus Stahlblech tiefgezogen sowie innen und außen emailliert wird, wobei nach dem Tiefziehen und vor dem Emaillieren des Rohkörpers folgende Schritte durchgeführt werden:
- der Boden (1) des Rohkörpers wird außen mit einer Kupferplatine (2) unterlegt;
- die Kupferplatine (2) wird mit einer Unterplatte (3) aus emaillierfähigem Metall, vorzugsweise aus Stahlblech, abgedeckt;
- die Kupferplatine (2) wird mit dem Boden (1) des Rohkörpers und mit der Unterplatte (3) verbunden;
**dadurch gekennzeichnet,**
**daß** zum Verbinden des Kupferplatine (2) mit dem Boden (1) des Rohkörpers und mit der Unterplatte (3) die Kupferplatine (2) mit dem Boden (1) des Rohkörpers und mit der Unterplatte (3) bei ca. 1100°C derart hochtemperatur-verlötet wird, daß sich eine Legierungsschicht (2') ergibt, die einen durchgehenden Verbund zwischen dem Boden (1) des Rohkörpers und der Unterplatte (3) darstellt.

2. Verfahren nach Anspruch 1, **dadurch gekennzeichnet, daß** die Hochtemperatur-Lötung unter gesteuerter Atmosphäre in einem Durchlaufofen durchgeführt wird.

3. Kochgeschirr mit einem tiefgezogenen Rohkörper aus Stahl, der einen Boden (1) und eine Seitenwandung aufweist sowie innen und außen emailliert ist, wobei
- der Boden (1) des Rohkörpers unter dem Email (4) außen mit einer Kupferplatine (2) unterlegt ist;
- daß die Kupferplatine (2) mit einer Unterplatte (3) aus emaillierfähigem Metall, insbesondere aus Stahlblech, abgedeckt ist; und
- die Kupferplatine (2) mit dem Boden (1) des Rohkörpers und mit der Unterplatte (3) verbunden ist,
**dadurch gekennzeichnet,**
**daß** die Kupferplatine (2) mit dem Boden (1) des Rohkörpers und mit der Unterplatte (3) hochtemperatur-verlötet ist, wobei das Kupfer der Platine mit dem Boden (1) des Rohkörpers und mit der Unterplatte (3) eine Legierungsschicht (2') ergeben hat, die einen durchgehenden Verbund zwischen dem Boden (1) des Rohkörpers und der Unterplatte (3) darstellt.

## Claims

1. Method of manufacturing an enameled cooking vessel in which a semi-finished body with a base (1) and side wall of steel plate is deep drawn from steel plate and enameled internally and externally, whereby after the deep drawing and before the enameling the following steps are performed:
a copper plate (2) is placed externally beneath the base (1) of the semi-finished body:
the copper plate (2) is covered with an underplate (3) of enamelable metal, preferably steel plate; and
the copper plate (2) is connected to the base (1) of the semi-finished body and to the underplate (3);
**characterised in that** in order to connect the copper plate (2) to the base (1) of the base (1) of the semi-finished body and to the underplate (3) the copper plate (2) is high temperature soldered to the base (1) of the semi-finished body and to the underplate (3) at ca. 1100°C such that an alloy layer (2') is produced, which constitutes a continuous connection between the base (1) of the semi-finished body and the underplate (3).

2. Method as claimed in claim 1 **characterised in that** the high temperature soldering is performed under a controlled atmosphere in a continuous-heating furnace.

3. Cooking vessel including a deep drawn semi-finished body of steel which has a base (1) and a side wall and is enameled internally and externally, wherein
a copper plate (2) is positioned externally beneath the base of the semi-finished body under the enamel (4);
that the copper plate (2) is covered with an underplate (3) of enamelable metal, particularly steel plate; and
that the copper plate (2) is connected to the base (1) of the semi-finished body and to the underplate (3),
**characterised in that** the copper plate (2) is high temperature soldered to the base (1) of the semi-finished body and to the underplate (3) whereby the copper of the plate has produced an alloy layer (2') with the base (1) of the semi-finished body and with the underplate (3), which constitutes a continuous connection between the base (1) of the semi-finished body and the underplate (3).

## Revendications

1. Procédé de fabrication d'une vaisselle de cuisson émaillée,
dans lequel un corps brut, comportant un fond (1) et une paroi latérale en tôle d'acier sont formés par emboutissage profond,
dans lequel après l'emboutissage profond et avant émaillage aussi bien intérieur qu'extérieur du corps brut sont effectuées les étapes ci-après :
le fond (1) du corps brut est revêtu extérieurement avec une platine en cuivre (2);
la platine en cuivre (2) est recouverte d'une plaque inférieure (3) en métal pouvant être émaillé, de préférence en tôle d'acier; et
la platine en cuivre (2) est brasée à haute température avec le fond (1) du corps brut et avec la plaque inférieure (3).
**caractérisé par le fait**
**que**, pour lier la platine en cuivre (2) au fond (1) du corps brut et à la plaque inférieure (3), la platine en cuivre (2) est brasée à haute température avec le fond (1) du corps brut et avec la plaque inférieure (3) à une température d'environ 1100°C, tel qu'il se forme une couche d'alliage (2') entre le fond (1) du corps brut et la plaque inférieure (3) constituant une liaison continue entre le fond du corps brut et la plaque inférieure (3).

2. Procédé selon la revendication 1, **caractérisé par le fait que** le brasage à haute température est effectué sous atmosphère régulée, dans un four à passage continu.

3. Vaisselle de cuisson avec un corps brut en acier obtenu par emboutissage profond, présentant un fond (1) et une paroi latérale et émaillé intérieurement et extérieurement,
dans laquelle le fond (1) du corps brut comporte sous l'émail (4), extérieurement une platine en cuivre (2),
la platine en cuivre (2) est recouverte d'une plaque inférieure (3) en métal pouvant être émaillé, en particulier en tôle d'acier, et
la platine en cuivre (2) est liée avec le fond (1) du corps brut et avec la plaque inférieure (3)
**caractérisée par le fait que**
la platine en cuivre (2) est brasée à haute température avec le fond (1) du corps brut et avec la plaque inférieure (3),
le cuivre de la platine ayant formé avec le fond (1) du corps brut et la plaque inférieure (3).une couche d'alliage qui constitue une liaison continue entre le fond (1) du corps brut et la plaque inférieure (3).
